# EUROPEAN PATENT APPLICATION

(11) **EP 4 458 471 A1**
(43) Date of publication of application: **06.11.2024**
(21) Application number: 22915488.5
(22) Date of filing: 25.10.2022
(51) Int. Cl.: B03B 5/30, B01J 4/00, G01N 1/34

(54) **CONTAINER AND PURIFICATION APPARATUS**

(30) Priority: 27.12.2021 JP 2021213099
(71) Applicant: Shimadzu Corporation, Nakagyo-ku, Kyoto-shi, Kyoto 604-8511 (JP)
(72) Inventor: TERADA, Masaaki, Kyoto-shi, Kyoto 604-8511 (JP)
(74) Representative: Kilian Kilian & Partner mbB
(86) International application number: PCT/JP2022/039626
(87) International publication number: WO 2023/127254

(57) **Abstract**

A container used for purification of a sample, the container simplifying works for checking a pipe for introduction and a pipe for discharge, is provided. A container (50) is included in a purification apparatus (1) that purifies a specific sample from a mixed sample. In the container (50), the mixed sample is accommodated. The container (50) has a shape extending in an axial direction. The container (50) has an outer circumferential surface. The container includes an introduction port (1F) for introduction into the container, of a decomposition solution for treatment of a contaminant contained in the mixed sample, a heavy solution for separation of the mixed sample based on a specific gravity difference, or a rinse solution for cleaning of the container, and a first discharge port (1E) for discharge of a waste solution from the container. When the container is viewed from the axial direction, the introduction port (1F) and the first discharge port (1E) are both arranged at positions displaced toward one end position (P1) on the outer circumferential surface of the container.

## Description

### TECHNICAL FIELD

The present disclosure relates to a container and a purification apparatus that purifies a sample.

### BACKGROUND ART

A technique to collect a target substance by purification of the target substance from a mixed sample has conventionally been known. For example, NPL 1 discloses a method of purifying and collecting microplastic from aquatic sediments. NPL 1 describes introduction of a heavy solution through a pipe connected to a lower portion of a container for collection of microplastic.

### CITATION LIST

### NON PATENT LITERATURE

NPL 1: "A novel, highly efficient method for the separation and quantification of plastic particles in sediments of aquatic environments," [Searched on December 10, 2021], the Internet <URL:https://aslopubs.onlinelibrary.wiley.com/doi/epdf/10.4319/lom.2012.10.524>

### SUMMARY OF INVENTION

### TECHNICAL PROBLEM

In purification of a target substance from a mixed sample in a container, a heavy solution, a rinse, or the like should be introduced into the container and a waste solution should be discharged to the outside of the container. Therefore, a pipe for introduction and a pipe for discharge may be connected to the container included in a purification apparatus.

When an abnormal condition such as clogging occurs in at least one of the pipe for introduction and the pipe for discharge, an unfavorable situation such as inability to discharge the waste solution in purification processing is caused. Though checking works for checking whether or not the abnormal condition has occurred in each of the pipe for introduction and the pipe for discharge are required, such checking works have been bothersome.

The present disclosure was made to solve the problem described above, and an object thereof is to provide a container included in a purification apparatus that purifies a sample, the container simplifying works for checking a pipe for introduction and a pipe for discharge.

### SOLUTION TO PROBLEM

A container according to one aspect of the present disclosure is included in a purification apparatus that purifies a specific sample from a mixed sample. In the container, the mixed sample is accommodated. The container has a shape extending in an axial direction. The container has an outer circumferential surface. The container includes an introduction port for introduction into the container, of a decomposition solution for treatment of a contaminant contained in the mixed sample, a heavy solution for separation of the mixed sample based on a specific gravity difference, or a rinse solution for cleaning of the container, and a first discharge port for discharge of a waste solution from the container. When the container is viewed from the axial direction, the introduction port and the first discharge port are both arranged at positions displaced toward one end position on the outer circumferential surface of the container.

### ADVANTAGEOUS EFFECTS OF INVENTION

According to the present disclosure, the introduction port and the first discharge port are located at positions displaced toward one end in the outer circumferential surface of the container. Therefore, a state of both of the introduction port and the first discharge port can be checked at a glance simply by viewing the container from a position opposed to one end, and hence works for checking the introduction port and the first discharge port can be simplified.

### BRIEF DESCRIPTION OF DRAWINGS

Fig. 1 is a diagram schematically showing a purification apparatus according to the present embodiment.
Fig. 2 is a diagram showing a construction of a purification instrument according to the present embodiment.
Fig. 3 is a diagram for illustrating a hardware configuration of the purification apparatus according to the present embodiment.
Fig. 4 is a flowchart of purification processing performed by the purification apparatus according to the present embodiment.
Fig. 5 is a first diagram for illustrating arrangement of an introduction port and a discharge port according to the present embodiment.
Fig. 6 is a second diagram for illustrating arrangement of the introduction port and the discharge port according to the present embodiment.
Fig. 7 is a first diagram for illustrating arrangement of the introduction port and the discharge port according to a modification.
Fig. 8 is a second diagram for illustrating arrangement of the introduction port and the discharge port according to the modification.

### DESCRIPTION OF EMBODIMENTS

The present embodiment will be described in detail with reference to the drawings. The same or corresponding elements in the drawings have the same reference characters allotted and description thereof will not be repeated in principle.

### [Main Construction of Purification Apparatus]

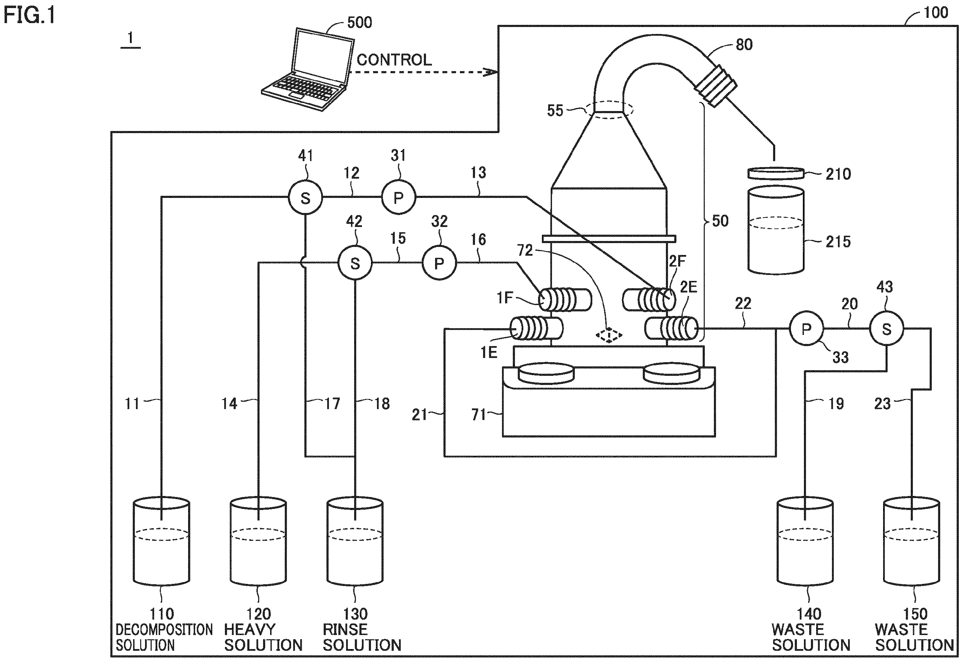

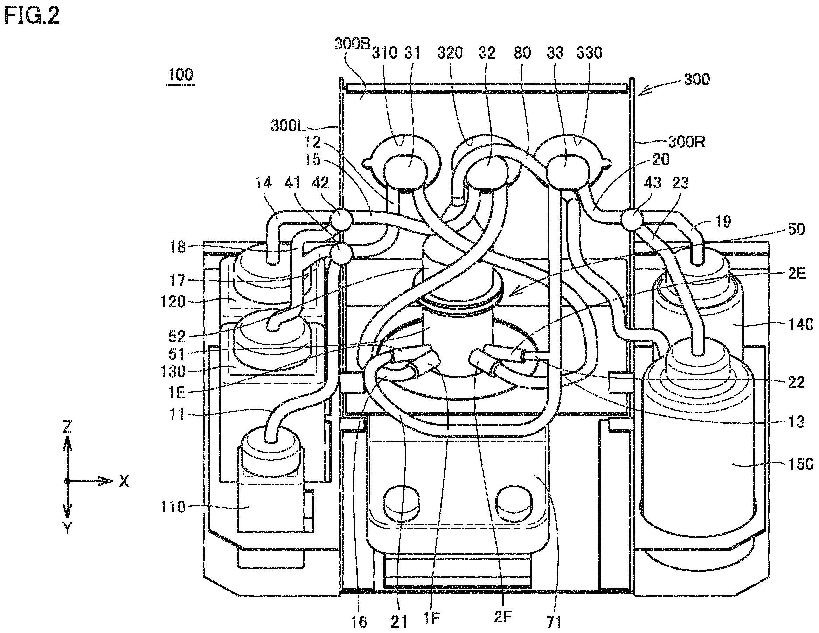

A main construction of a purification apparatus 1 and a purification instrument 100 according to the present embodiment will be described with reference to Figs. 1 and 2. Fig. 1 is a diagram schematically showing purification apparatus 1 according to the present embodiment. Fig. 2 is a diagram showing a construction of purification instrument 100 according to the present embodiment.

As shown in Fig. 1, purification apparatus 1 includes purification instrument 100 that purifies a target substance from a mixed sample and a control device 500. Control device 500 controls purification instrument 100. In purification apparatus 1 according to the present embodiment, control device 500 controls purification instrument 100 to purify and collect the target substance from the mixed sample. "Purification" encompasses taking a target substance out of the mixed sample. In the present disclosure, "taking the target substance out of the mixed sample" may simply be referred to as "purification of the sample."

Anything containing a target substance to be collected may be applicable as a "mixed sample." Exemplary "mixed samples" include seawater and sand collected from the sea or the seashore and processed products such as food and cosmetics. In the present embodiment, seawater and sand collected from the sea or the seashore represent an exemplary "mixed sample."

Any substance collected by purification apparatus 1 may be applicable as the target substance to be collected by purification apparatus 1. Exemplary target substances include microplastic which is fine plastic particles having a size not larger than 5 mm. In the present embodiment, microplastic contained in seawater and sand collected from the sea or the seashore represents an exemplary target substance. Microplastic which is the target substance is an exemplary "specific sample" in the present disclosure.

As shown in Figs. 1 and 2, purification instrument 100 includes a container 50 where a mixed sample is accommodated, pipes 11 to 23, pumps 31 to 33, electromagnetic valves 41 to 43, introduction ports 1F and 2F, discharge ports 1E and 2E, a stirrer 71, a stirring bar 72, a discharge pipe 80, a decomposition solution reservoir 110, a heavy solution reservoir 120, a rinse solution reservoir 130, waste solution reservoirs 140 and 150, a filter 210, a supernatant reservoir 215, and a casing 300. Though purification instrument 100 in the present embodiment includes two introduction ports of introduction ports 1F and 2F, it may include only a single introduction port. Though purification instrument 100 includes two discharge ports of discharge ports 1E and 2E, it may include only a single discharge port.

Casing 300 surrounds a circumference of container 50. Casing 300 in the present embodiment includes a casing 300B arranged on a rear surface of container 50, a casing 300R arranged on the right of container 50, and a casing 300L arranged on the left of container 50. Casing 300 represents an exemplary "wall portion" in the present disclosure.

In Fig. 2, a vertical direction when container 50 is installed is referred to as a "Z-axis direction." A direction in which casing 300B extends when casing 300B is viewed from a side of a positive direction of the Z-axis direction is referred to as an "X-axis direction." A direction in which casing 300L or casing 300R extends when casing 300L or casing 300R is viewed from the side of the positive direction of the Z-axis direction is referred to as a "Y-axis direction." Each of the X-axis direction and the Y-axis direction is a direction perpendicular to the Z-axis direction. The positive direction of a Z axis in each figure may be referred to as an "upper side" and a negative direction of the Z axis may be referred to as a "lower side," the positive direction of an X axis may be referred to as a "right side" and the negative direction of the X axis may be referred to as a "left side," and the positive direction of a Y axis may be referred to as a "front side" and the negative direction of the Y axis may be referred to as a "rear side."

Casing 300 may include an upper casing that covers an upper surface of the container. As shown in Fig. 2, casing 300B is provided with passage holes 310, 320, and 330 for arrangement of respective pumps 31, 32, and 33.

Container 50 includes a first member 51 and a second member 52 located above first member 51. Container 50 is dividable into first member 51 and second member 52. A user puts a mixed sample in the inside of first member 51 by removing second member 52 from first member 51. First member 51 and second member 52 are fixed in a connected state by a fixing tool (not shown) or the like.

The mixed sample is thus accommodated in the inside of container 50. Container 50 according to the present embodiment is in a shape extending in the Z-axis direction. More specifically, first member 51 of container 50 is formed in a shape of a column with a circular bottom surface. Since first member 51 of container 50 is in the columnar shape, purification apparatus 1 in the present embodiment achieves improvement in efficiency in processing for stirring the mixed sample accommodated in container 50. In other words, since first member 51 of container 50 is in the columnar shape, uniform stirring of the mixed sample accommodated in the inside of container 50 is facilitated. The bottom surface of container 50 is not limited to the circular surface but may be in another shape such as a polygonal shape or an oval shape. Container 50 in the present embodiment is formed of glass. In other words, container 50 is transparent, and a user can externally visually recognize the mixed sample accommodated in container 50. Thus, the user can externally check occurrence of clogging or the like in introduction port 1F or 2F or discharge port 1E or 2E in container 50 in the present embodiment.

Pipe 11 connects decomposition solution reservoir 110 and electromagnetic valve 41 to each other. Pipe 12 connects electromagnetic valve 41 and pump 31 to each other. Pipe 13 connects pump 31 and introduction port 2F to each other. Introduction port 2F is provided in an outer circumferential portion of container 50. Decomposition solution reservoir 110 and introduction port 2F of container 50 are thus connected to each other through pipes 11, 12, and 13 with electromagnetic valve 41 and pump 31 being interposed.

Pipe 14 connects heavy solution reservoir 120 and electromagnetic valve 42 to each other. Pipe 15 connects electromagnetic valve 42 and pump 32 to each other. Pipe 16 connects pump 32 and introduction port 1F to each other. Port 62 is provided in the outer circumferential portion of container 50. Heavy solution reservoir 120 and introduction port 1F of container 50 are thus connected to each other through pipes 14, 15, and 16 with electromagnetic valve 42 and pump 32 being interposed.

Pipe 17 connects rinse solution reservoir 130 and electromagnetic valve 41 to each other. In other words, while electromagnetic valve 41 is connected to decomposition solution reservoir 110 through pipe 11, it is connected also to rinse solution reservoir 130 through pipe 17. Rinse solution reservoir 130 and introduction port 2F of container 50 are thus connected to each other through pipes 17, 12, and 13 with electromagnetic valve 41 and pump 31 being interposed.

Pipe 18 connects rinse solution reservoir 130 and electromagnetic valve 42 to each other. In other words, while electromagnetic valve 42 is connected to heavy solution reservoir 120 through pipe 14, it is connected also to rinse solution reservoir 130 through pipe 18. Rinse solution reservoir 130 and introduction port 1F of container 50 are thus connected to each other through pipes 18, 15, and 16 with electromagnetic valve 42 and pump 32 being interposed.

Pipe 19 connects waste solution reservoir 140 and electromagnetic valve 43 to each other. Pipe 20 connects electromagnetic valve 43 and pump 33 to each other. Pipe 21 connects pump 33 and discharge port 1E to each other. Discharge port 1E is provided in the outer circumferential portion of container 50. Waste solution reservoir 140 and discharge port 1E of container 50 are thus connected to each other through pipes 19, 20, and 21 with electromagnetic valve 43 and pump 33 being interposed.

Pipe 22 connects discharge port 2E and port 64 to each other. Discharge port 2E is provided in the outer circumferential portion of container 50. In other words, while pump 33 is connected to discharge port 1E of container 50 through pipe 21, it is connected also to discharge port 2E of container 50 through pipe 22. Waste solution reservoir 140 and discharge port 2E of container 50 are thus connected to each other through pipes 19, 20, and 22 with electromagnetic valve 43 and pump 33 being interposed.

Pipe 23 connects waste solution reservoir 150 and electromagnetic valve 43 to each other. In other words, while electromagnetic valve 43 is connected to waste solution reservoir 140 through pipe 19, it is connected also to waste solution reservoir 150 through pipe 23. Waste solution reservoir 150 and discharge port 1E of container 50 are thus connected to each other through pipes 23, 20, and 21 with electromagnetic valve 43 and pump 33 being interposed. Waste solution reservoir 150 and discharge port 2E of container 50 are connected to each other through pipes 23, 20, and 22 with electromagnetic valve 43 and pump 33 being interposed.

A decomposition solution for treatment of a contaminant is stored in decomposition solution reservoir 110. The "contaminant" refers to a foreign matter in the mixed sample, other than a target substance to be collected. In the present embodiment, an exemplary "contaminant" includes an organic contaminant having a property of an organic substance. Any "decomposition solution" may be applicable so long as the contaminant is decomposed therewith. In the present embodiment, the "decomposition solution" decomposes an organic contaminant. An exemplary "decomposition solution" includes an oxidizing agent such as oxygenated water (H₂O₂) and a mixture of oxygenated water (H₂O₂) and iron (II) oxide (FeO). When seawater and sand are adopted as the "mixed sample," exemplary "organic contaminants" include a scrap piece of wood mixed in seawater or sand and planktons.

A heavy solution for separation of a mixed sample based on a specific gravity difference is stored in heavy solution reservoir 120. Any heavy solution may be applicable so long as the "heavy solution" separates the mixed sample based on the specific gravity difference. In the present embodiment, the "heavy solution" allows an inorganic contaminant having a property of an inorganic substance to settle based on the specific gravity difference. Exemplary "heavy solutions" include sodium chloride (NaCl), sodium iodide (NaI), and zinc chloride (ZnCl₂). When seawater and sand are adopted as the "mixed sample," exemplary "inorganic contaminants" include sand, glass, and stone. A specific gravity of the "heavy solution" is set to be greater than a specific gravity of the target substance to be collected by purification apparatus 1 and to be smaller than a specific gravity of the "inorganic contaminant." For example, when microplastic is adopted as the target substance to be collected by purification apparatus 1 and sand, glass, stone, and the like are adopted as the "inorganic contaminant," the "heavy solution" should only be greater in specific gravity than microplastic and should only be smaller in specific gravity than sand, glass, stone, and the like. Specifically, the specific gravity of the "heavy solution" should only be set approximately to 1.5 to 1.7.

A rinse solution for cleaning of the inside of container 50 is stored in rinse solution reservoir 130. Any rinse solution may be applicable so long as the inside of container 50 is cleaned with the "rinse solution." An exemplary "rinse solution" includes water. The "rinse solution" plays a role to clean the inside of container 50 and a role to dilute the decomposition solution introduced into container 50.

A waste solution discharged from container 50 such as the heavy solution, the rinse solution, and sea water contained in the mixed sample is stored in waste solution reservoirs 140 and 150.

Pump 31 introduces the decomposition solution in decomposition solution reservoir 110 or the rinse solution in rinse solution reservoir 130 into container 50 through introduction port 2F under the control by control device 500.

Pump 32 introduces the heavy solution in heavy solution reservoir 120 or the rinse solution in rinse solution reservoir 130 into container 50 through introduction port 1F under the control by control device 500.

Pump 33 discharges the waste solution in container 50 through discharge port 1E or discharge port 2E to waste solution reservoir 140 or waste solution reservoir 150 under the control by control device 500.

Electromagnetic valve 41 switches a reservoir to be connected to introduction port 2F between decomposition solution reservoir 110 and rinse solution reservoir 130 under the control by control device 500.

Electromagnetic valve 42 switches a reservoir to be connected to introduction port 1F between heavy solution reservoir 120 and rinse solution reservoir 130 under the control by control device 500.

Electromagnetic valve 43 switches a path to be connected to discharge ports 1E and 2E between a path between waste solution reservoir 140 and discharge ports 1E and 2E of container 50 (a path through pipes 19, 20, and 21 or a path through pipes 19, 20, and 22) and a path between waste solution reservoir 150 and discharge ports 1E and 2E of container 50 (a path through pipes 23, 20, and 21 or a path through pipes 23, 20, and 22) under the control by control device 500.

The decomposition solution in decomposition solution reservoir 110 or the rinse solution in rinse solution reservoir 130 suctioned by pump 31 is introduced into container 50 through introduction port 2F. The heavy solution in heavy solution reservoir 120 or the rinse solution in rinse solution reservoir 130 suctioned by pump 32 is introduced into container 50 through introduction port 1F. The waste solution in container 50 suctioned by pump 33 is discharged to waste solution reservoir 140 or waste solution reservoir 150 through discharge ports 1E and 2E.

In the inside of each of introduction ports 1F and 2F and discharge ports 1E and 2E, a filter (not shown) is provided not to allow discharge from container 50, of a target substance contained in the mixed sample. The filter is a mesh having a mesh size small enough to trap microplastic to be collected. The filter (mesh) is, for example, a wire gauze made of steel use stainless (SUS) or a membrane filter made of polytetrafluoroethylene (PTFE) (Teflon^{™}). When microplastic is to be collected, the mesh size of the filter (mesh) should be small enough not to allow passage therethrough of a particle having a size of 0.1 to 5.0 mm, and the mesh size is preferably approximately 0.1 mm. Introduction ports 1F and 2F and discharge ports 1E and 2E may collectively be referred to as the "port" below.

Stirrer 71 is, for example, a magnetic constant-temperature stirrer, and arranged below container 50. Stirrer 71 generates magnetic force under the control by control device 500 to rotate stirring bar 72 provided in container 50. Stirring bar 72 stirs the mixed sample in container 50 by rotation or vibration upon receiving magnetic force from stirrer 71.

Furthermore, stirrer 71 keeps a temperature of the mixed sample in container 50 constant by heating container 50 from below container 50 under the control by control device 500. A temperature of stirrer 71 is set approximately to 60°C to 70°C, and fluid in container 50 heated by stirrer 71 in accordance with a setting temperature is kept at approximately 50°C.

Discharge pipe 80 is connected to a discharge port 55 provided at an uppermost portion of container 50, and a supernatant of the mixed sample that flows over container 50 is discharged therethrough to the outside.

Filter 210 collects the target substance to be collected that is contained in the supernatant of the mixed sample discharged through discharge pipe 80 by filtering the supernatant. The supernatant that has passed through filter 210 is collected in supernatant reservoir 215. Filter 210 is a mesh having a mesh size small enough to trap microplastic to be collected. Filter 210 (mesh) is, for example, a wire gauze made of SUS or a membrane filter made of PTFE. When microplastic is to be collected, the mesh size (size) of filter 210 should be small enough not to allow passage therethrough of a particle having a size of 0.1 to 5.0 mm, and the mesh size is preferably approximately 0.1 mm.

Control device 500 may be implemented by a general-purpose computer or a dedicated computer for controlling purification instrument 100. Control device 500 controls pumps 31 to 33, electromagnetic valves 41 to 43, and stirrer 71 in purification instrument 100.

Specifically, control device 500 has electric power provided to pumps 31 to 33 to drive motors (not shown) to thereby open and close valves (not shown). Pumps 3 1 to 33 thus suction or deliver various types of fluid.

Control device 500 has electric power provided to electromagnetic valves 41 to 43 to open and close the valves (not shown). Electromagnetic valves 41 to 43 thus switch a path through which various types of fluid pass.

Control device 500 has electric power provided to stirrer 71 to drive a motor (not shown) to thereby rotate stirring bar 72 in container 50 with magnetic force. Furthermore, control device 500 has electric power provided to stirrer 71 to drive a heater (not shown) to apply certain heat to container 50.

### [Hardware Configuration of Purification Apparatus]

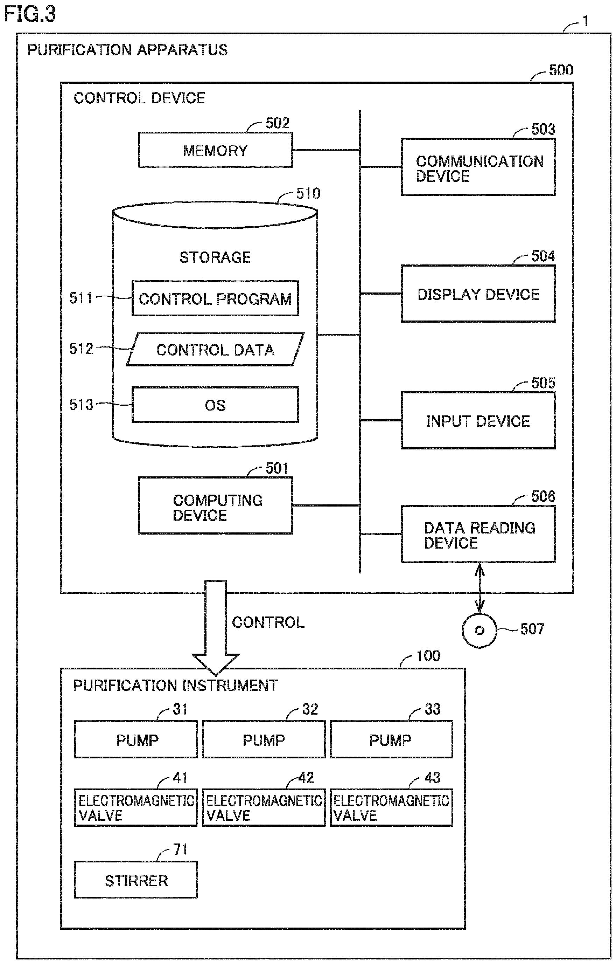

A hardware configuration of purification apparatus 1 according to the present embodiment will be described with reference to Fig. 3. Fig. 3 is a diagram for illustrating a hardware configuration of purification apparatus 1 according to the present embodiment. As shown in Fig. 3, control device 500 includes, as main hardware elements thereof, a computing device 501, a memory 502, a communication device 503, a display device 504, an input device 505, a data reading device 506, and a storage 510.

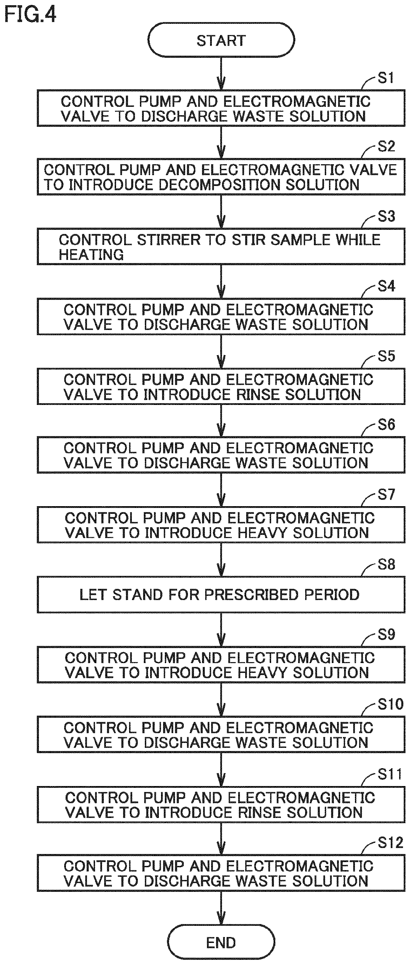

Computing device 501 is a computer that reads a program (for example, a control program 511 and an operating system (OS) 513) stored in storage 510 and develops the read program on memory 502 to execute the same. For example, computing device 501 performs purification processing (which will be described later with reference to Fig. 4) for controlling purification instrument 100 by executing control program 511. Computing device 501 is implemented, for example, by a central processing unit (CPU), a field programmable gate array (FPGA), a graphics processing unit (GPU), a multi processing unit (MPU), or the like. Computing device 501 may be implemented by processing circuitry.

Memory 502 provides a storage area where a program code or a work memory is temporarily stored in execution of any program by computing device 501. Memory 502 is implemented by a volatile memory such as a dynamic random access memory (DRAM) or a static random access memory (SRAM) or a non-volatile memory such as a read only memory (ROM) or a flash memory.

Communication device 503 transmits and receives data to and from another device over a network (not shown). Communication device 503 is in conformity with any communication scheme such as Ethernet^{®}, wireless local area network (LAN), and Bluetooth^{®}.

Display device 504 is implemented, for example, by a liquid crystal display (LCD), and shows a program design screen or an alert screen on the occurrence of an abnormal condition.

Input device 505 is implemented, for example, by a keyboard, a mouse, or the like, and used for input of design information by a user in design of a program. Input device 505 may include a start switch for starting purification processing by computing device 501.

Data reading device 506 reads data stored in a storage medium 507. Any other storage medium such as a compact disc (CD), a digital versatile disc (DVD), or a universal serial bus (USB) memory may be applicable so long as various types of data can be stored in storage medium 507.

Storage 510 provides a storage area where various types of data required for purification processing or the like are stored. Storage 510 is implemented, for example, by a non-volatile memory device such as a hard disk drive (HDD) or a solid state drive (SSD). Control program 511, control data 512, and operating system (OS) 513 are stored in storage 510.

Control program 511 is a program in which contents of purification processing are described, and executed by computing device 501. Control program 511 may be designed by a user with the use of input device 505, read from storage medium 507 by data reading device 506, or obtained through the network from another device such as a server by communication device 503.

Control data 512 is data used in execution of control program 511 by computing device 501. For example, control data 512 includes data such as a setting value for control of each of pumps 31 to 33, electromagnetic valves 41 to 43, and stirrer 71. Control data 512 may be inputted by a user with the use of input device 505, read from storage medium 507 by data reading device 506, or obtained through the network from another device such as a server by communication device 503.

OS 513 provides a basic function for computing device 501 to perform various types of processing.

### [Mixed Sample Purification Processing]

Mixed sample purification processing performed by purification apparatus 1 will now be described with reference to Fig. 4. Fig. 4 is a flowchart of purification processing performed by purification apparatus 1 according to the present embodiment. Each step shown in Fig. 4 is performed by execution of OS 513 and control program 511 by computing device 501 of control device 500. "S" in the drawings is used as abbreviation of "STEP".

For preparation, a user introduces a mixed sample into container 50 of purification apparatus 1. For example, the user removes the first member from the second member to open container 50 to introduce the mixed sample into container 50. Thereafter, the user performs a start operation with the use of input device 505 of control device 500 to start control of purification instrument 100 by control device 500.

When control device 500 starts control of purification instrument 100, as shown in Fig. 4, control device 500 controls pump 33 and electromagnetic valve 43 to discharge the waste solution in container 50 to waste solution reservoir 150 through pipes 20 to 23 and ports 63 and 64 (S1). Microplastic or the like to be collected that is contained in the mixed sample remains in container 50 without being discharged to the outside, owing to the filter provided in the inside of ports 63 and 64.

Control device 500 then deactivates pump 33 on a discharge side and controls pump 31 and electromagnetic valve 41 to introduce the decomposition solution in decomposition solution reservoir 110 into container 50 through pipes 11 to 13 and port 61 (S2).

Control device 500 then controls stirrer 71 to rotate stirring bar 72 provided in container 50 to stir the mixed sample while certain heat is applied to container 50 (S3). A temperature of container 50 and a rotation speed and a rotation time period of stirring bar 72 are set in advance by the user. As the mixed sample is thus stirred, oxidation treatment with an oxidizing agent is performed and an organic contaminant contained in the mixed sample is decomposed. Though heating is not necessarily required during stirring of the mixed sample, decomposition by oxidation treatment tends to be accelerated by the temperature of the mixed sample maintained constant by heating.

Control device 500 then controls pump 33 and electromagnetic valve 43 to discharge the waste solution in container 50 included in the mixed sample in which the organic contaminant has been decomposed to waste solution reservoir 150 through pipes 20 to 23 and ports 63 and 64 (S4). Microplastic or the like to be collected that is contained in the mixed sample remains in container 50 without being discharged to the outside, owing to the filter provided in the inside of ports 63 and 64.

Control device 500 then deactivates pump 33 on the discharge side and controls pump 31 and electromagnetic valve 41 to introduce the rinse solution in rinse solution reservoir 130 into container 50 through pipes 17, 12, and 13 and port 61 to clean the inside of container 50 (S5). At this time, control device 500 controls an amount of suction by pump 31 to introduce the rinse solution in an amount set in advance by the user into container 50.

Control device 500 then controls pump 33 and electromagnetic valve 43 to discharge the waste solution in container 50 into which the rinse solution has been introduced to waste solution reservoir 150 through pipes 20 to 23 and ports 63 and 64 (S6). The inside of container 50 is thus cleaned with the rinse solution. Microplastic or the like to be collected that is contained in the mixed sample remains in container 50 without being discharged to the outside, owing to the filter provided in the inside of ports 63 and 64. Thereafter, control device 500 may let the mixed sample stand as it is for a prescribed period (for example, for one day) to dry the mixed sample.

Control device 500 then controls pump 32 and electromagnetic valve 42 to introduce the heavy solution in heavy solution reservoir 120 into container 50 through pipes 14 to 16 and port 62 (S7). At this time, control device 500 controls the amount of suction by pump 32 to introduce the heavy solution in an amount set in advance by the user into container 50.

Thereafter, control device 500 lets the mixed sample stand as it is for a prescribed period (for example, for one day) (S8). As the heavy solution is thus introduced into the mixed sample in container 50 and let stand, an inorganic contaminant contained in the mixed sample settles around the bottom of container 50 owing to the specific gravity difference.

Control device 500 then again controls pump 32 and electromagnetic valve 42 to again introduce the heavy solution in heavy solution reservoir 120 into container 50 through pipes 14 to 16 and port 62 (S9). At this time, control device 500 controls the amount of suction by pump 32 to introduce the heavy solution in the amount set in advance by the user into container 50. As the heavy solution is thus introduced again into the mixed sample in container 50, a fluid level of the mixed sample separated based on the specific gravity gradually rises in container 50 and the supernatant of the mixed sample soon reaches discharge port 55 of container 50. Then, the supernatant of the mixed sample is discharged to the outside through discharge port 55 and discharge pipe 80.

The supernatant of the mixed sample discharged through discharge pipe 80 is filtered by filter 210, and only the waste solution is collected in supernatant reservoir 215. Microplastic which is the target substance lighter in specific gravity than the heavy solution remains at filter 210.

After microplastic is collected as a result of purification of the mixed sample, control device 500 has container 50 cleaned as post-treatment. Specifically, control device 500 controls pump 33 and electromagnetic valve 43 to discharge the waste solution in container 50 from which microplastic has been collected to waste solution reservoir 140 through pipes 19 to 22 and ports 63 and 64 (S10).

Control device 500 then deactivates pump 33 on the discharge side and controls pump 32 and electromagnetic valve 42 to introduce the rinse solution in rinse solution reservoir 130 into container 50 through pipes 18, 15, and 16 and port 62 to clean the inside of container 50 (S11). At this time, control device 500 controls the amount of suction by pump 32 to introduce the rinse solution in the amount set in advance by the user into container 50.

Control device 500 then controls pump 33 and electromagnetic valve 43 to discharge the waste solution in container 50 into which the rinse solution has been introduced to waste solution reservoir 140 through pipes 19 to 22 and ports 63 and 64 (S12). The inside of container 50 is thus cleaned with the rinse solution.

As set forth above, according to purification apparatus 1 according to the present embodiment, control device 500 automatically has the decomposition solution and the heavy solution introduced into the mixed sample accommodated in container 50 at appropriate timing for an appropriate time period, or has the waste solution discharged from container 50. Therefore, the user himself/herself does not have to introduce the decomposition solution and the heavy solution into container 50 or to discharge the waste solution from container 50. Thus, time and efforts by the user are not required, there is no possibility of variation in accuracy in collection of microplastic depending on skills of the user, and the user can accurately purify the mixed sample without spending time and efforts.

Furthermore, according to purification apparatus 1 according to the present embodiment, after microplastic is collected, control device 500 has used container 50 automatically cleaned. Therefore, the user himself/herself does not have to clean container 50.

### [As to Discharge Port and Introduction Port]

As described above, in purification apparatus 1 in the present embodiment, the mixed sample is seawater, sand, or the like. Seawater, sand, or the like taken from the nature may contain a contaminant which may cause clogging of introduction port 1F or 2F and discharge port 1E or 2E. For example, when the mixed sample contains the contaminant larger than the inner diameter of introduction port 1F or 2F and discharge port 1E or 2E, the contaminant may clog a portion of connection between the port and the container. Consequently, a flow of the heavy solution, the decomposition solution, the rinse solution, the waste solution, or the like may be blocked.

Purification apparatus 1 according to the present embodiment automatically performs purification processing at appropriate timing for an appropriate time period under the control by control device 500 unless an abnormal condition occurs in purification apparatus 1. In other words, the purification apparatus can perform the purification processing without requiring an operation or intervention by the user for each type of processing.

When an abnormal condition such as clogging occurs in at least one of introduction ports 1F and 2F and discharge ports 1E and 2E during the purification processing, purification apparatus 1 is unable to perform normal purification processing. When the purification processing proceeds with the abnormal condition being maintained in at least one of introduction ports 1F and 2F and discharge ports 1E and 2E, the user recognizes that the purification processing automatically normally proceeds, and hence long time is required before the user is aware of occurrence of the abnormal condition.

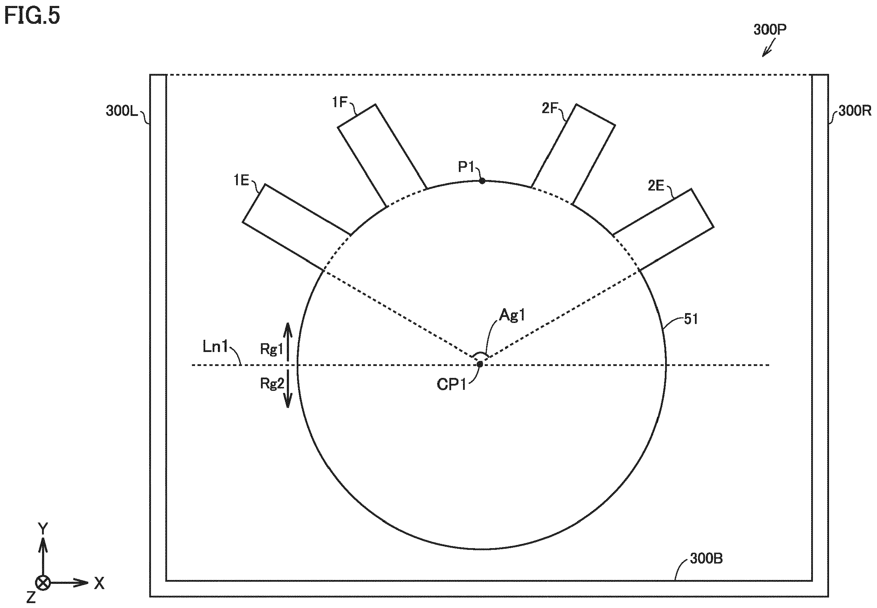

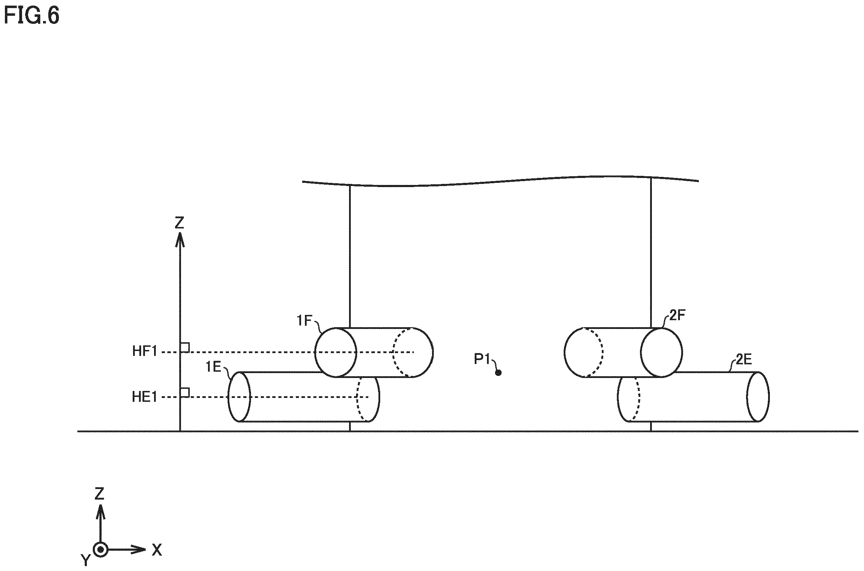

Therefore, in purification apparatus 1, checking works for checking a state of the port may be carried out. Purification apparatus 1 according to the present embodiment is constructed to simplify the works for checking the port. A construction of introduction ports 1F and 2F and discharge ports 1E and 2E in purification apparatus 1 according to the present embodiment will be described below with reference to Figs. 5 and 6. Specifically, in purification apparatus 1 in the present embodiment, introduction ports 1F and 2F and discharge ports 1E and 2E are arranged at positions displaced toward one end in the outer circumferential surface of container 50, so that the checking works are simplified. The outer circumferential surface of container 50 is a surface that surrounds the axial direction of container 50. Regarding container 50 in a columnar shape, a side surface of container 50 corresponds to the outer circumferential surface.

Fig. 5 is a first diagram for illustrating arrangement of introduction ports 1F and 2F and discharge ports 1E and 2E according to the present embodiment. Fig. 5 shows container 50 and casing 300 when viewed from the side of the negative direction of the Z axis. Therefore, Fig. 5 shows a circular shape which is the shape of the bottom surface of first member 51 of container 50.

On the side of the positive direction of the X axis of container 50, casing 300R which is a part of casing 300 is arranged. On the side of the negative direction of the X axis of container 50, casing 300L which is a part of casing 300 is arranged. Furthermore, on the side of the negative direction of the Y axis of container 50, casing 300B which is a part of casing 300 is arranged. On the side of the positive direction of the Y axis of container 50, casing 300 is not arranged. In other words, casing 300 is provided with an opening 300P on the side of the positive direction of the Y axis of container 50.

An end P1 is an end of the outer circumferential surface of container 50 when container 50 is viewed from the side of the negative direction of the Z axis. End P1 is the end at a position closest to opening 300P in the outer circumferential surface of container 50. As shown in Fig. 5, introduction ports 1F and 2F and discharge ports 1E and 2E are arranged at positions displaced toward end P1 in the outer circumferential surface of container 50.

Specifically, introduction ports 1F and 2F and discharge ports 1E and 2E are arranged in a first region Rg1 in the outer circumferential surface of container 50. First region Rg1 is one region when a region of the outer circumferential surface of container 50 is divided into two parts, a boundary between which is defined by a line Ln1 that passes through a center point CP1 in the shape of the bottom surface of container 50. In other words, first region Rg1 is the region on the side of the positive direction of the Y axis in the outer circumferential surface of container 50. A second region Rg2, on the other hand, is a region on the side of the negative direction of the Y axis in the outer circumferential surface of container 50. Introduction ports 1F and 2F and discharge ports 1E and 2E are arranged in a semicircle of the circular shape of container 50 when viewed from the negative direction of the Z axis.

More specifically, an angle Ag1 of intersection between a line that connects discharge port 1E and center point CP1 to each other and a line that connects discharge port 2E and center point CP1 to each other is 120 degrees. Any angle Ag1 may be applicable so long as it is smaller than 180 degrees.

In container 50 included in purification apparatus 1 in the present embodiment, arrangement of all of introduction ports 1F and 2F and discharge ports 1E and 2E is thus displaced toward end P1 in the outer circumferential surface of container 50. The state of all of introduction ports 1F and 2F and discharge ports 1E and 2E is thus visually recognizable at once simply by viewing container 50 from the side opposed to end P1. In other words, the user can check at a glance, the state of each of introduction ports 1F and 2F and discharge ports 1E and 2E. Therefore, container 50 included in purification apparatus 1 in the present embodiment can simplify the works for checking introduction ports 1F and 2F and discharge ports 1E and 2E.

As shown in Fig. 5, introduction ports 1F and 2F and discharge ports 1E and 2E are arranged in the order of discharge port 1E, introduction port 1F, introduction port 2F, and discharge port 2E from the side of the negative direction of the X axis along the outer circumferential surface of container 50. In other words, introduction ports 1F and 2F are arranged between discharge port 1E and discharge port 2E along the outer circumferential surface of container 50.

Container 50 can thus suppress, when any one of discharge port 1E and discharge port 2E is clogged by the contaminant, concentration of the contaminant in the port which is not clogged. For example, when discharge port 1E and discharge port 2E are successively arranged in the outer circumferential surface of container 50 and discharge port 1E is clogged, the contaminant is concentrated in the vicinity of discharge port 1E due to suction by pump 33. Consequently, the contaminant is concentrated also in discharge port 2E arranged in the vicinity of discharge port 1E, and clogging may be caused in a linked manner. In container 50 in the present embodiment, discharge port 1E and discharge port 2E are located at positions distant from each other. Therefore, even when any one discharge port is clogged, clogging in the other discharge port in a linked manner can be suppressed.

Fig. 6 is a second diagram for illustrating arrangement of introduction ports 1F and 2F and discharge ports 1E and 2E according to the present embodiment. Fig. 6 shows container 50 when viewed from the side of the positive direction of the Y axis. In other words, Fig. 6 shows container 50 when end P1 is viewed from a position of opening 300P provided in casing 300. Introduction ports 1F and 2F and discharge ports 1E and 2E are thus arranged at positions opposed to opening 300P. Therefore, container 50 in the present embodiment can simplify the works for checking introduction ports 1F and 2F and discharge ports 1E and 2E; simply by viewing introduction ports 1F and 2F and discharge ports 1E and 2E through opening 300P, they are checked.

As shown in Fig. 6, a height HE1 at which discharge port 1E is connected to container 50 is lower than a height HF 1 at which introduction port 1F is connected to container 50. In other words, discharge port 1E is arranged on the side of the negative direction of the Z axis of introduction port 1F. Discharge port 2E is connected to container 50 at a position at height HE1, similarly to discharge port 1E. Introduction port 2F is connected to container 50 at a position at height HF1, similarly to introduction port 1F.

Thus, in container 50 in the present embodiment, height HE1 at which discharge ports 1E and 2E are arranged in the outer circumferential surface of container 50 is different from height HF1 at which introduction ports 1F and 2F are arranged in the outer circumferential surface of container 50. The user can thus recognize whether a port is the introduction port or the discharge port, based on a difference in height at which the port is arranged, and connection of a pipe to a wrong port can be suppressed. Furthermore, height HE1 at which discharge ports 1E and 2E are arranged is lower than height HF 1 at which introduction ports 1F and 2F are arranged, so that discharge of the waste solution in container 50 can be smoothed. In other words, discharge ports 1E and 2E are arranged at the positions close to the bottom surface, so that the waste solution in container 50 tends to be guided to discharge ports 1E and 2E.

### [Modification]

Figs. 5 and 6 illustrate the construction in which container 50 is columnar. Container 50, however, may be in another shape instead of the columnar shape.

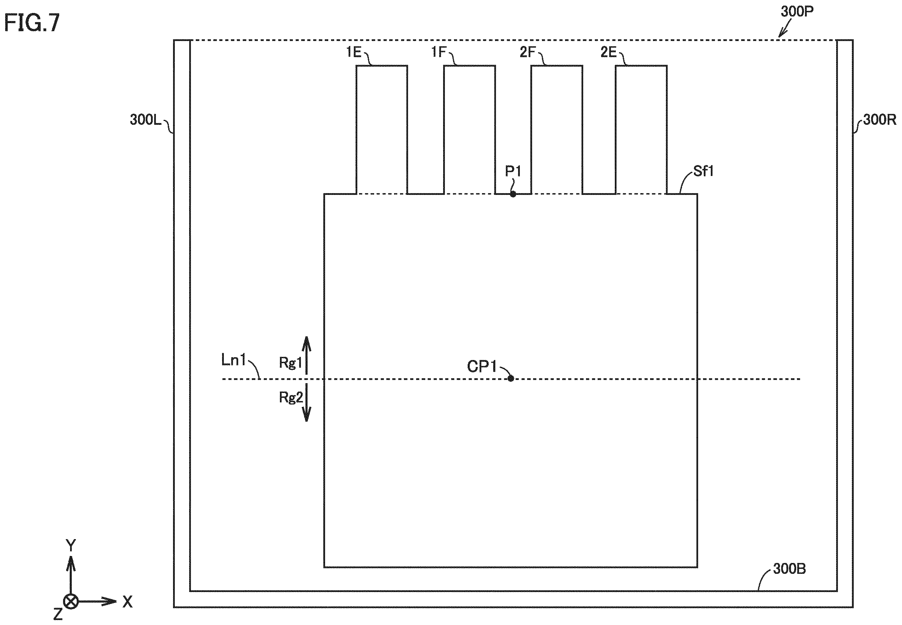

Fig. 7 is a first diagram for illustrating arrangement of introduction ports 1F and 2F and discharge ports 1E and 2E according to a modification. Fig. 7 shows container 50 and casing 300 in the modification when viewed from the side of the negative direction of the Z axis. As shown in Fig. 7, container 50 in the modification has the bottom surface in a quadrangular shape. In other words, container 50 in the modification is in a shape of a quadrangular prism having the Z axis as the axial direction.

In the modification in Fig. 7 as well, in container 50 included in purification apparatus 1 in the modification, each of introduction ports 1F and 2F and discharge ports 1E and 2E is arranged at a position displaced toward end P1 in the outer circumferential surface of container 50. More specifically, each of introduction ports 1F and 2F and discharge ports 1E and 2E is arranged in a surface Sf1 opposed to opening 300P in a side surface of the quadrangular prism.

The state of all of introduction ports 1F and 2F and discharge ports 1E and 2E is thus visually recognizable at once simply by viewing container 50 from the side opposed to end P1. Therefore, container 50 included in purification apparatus 1 in the modification can simplify the works for checking introduction ports 1F and 2F and discharge ports 1E and 2E.

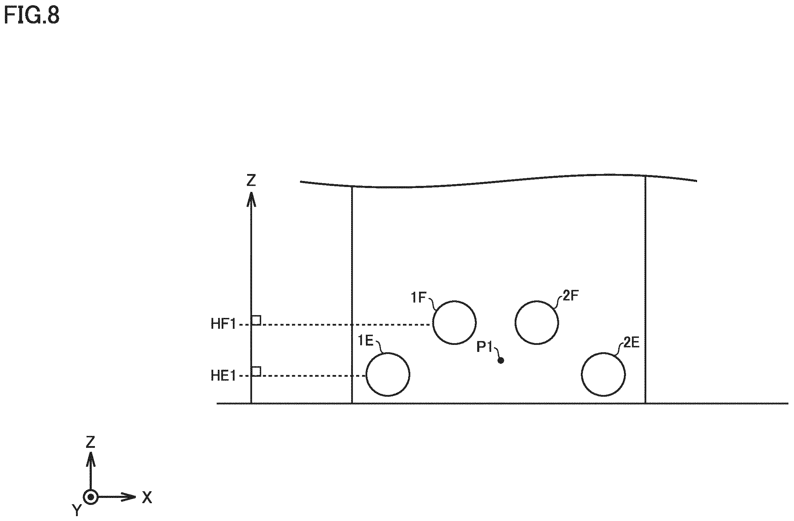

Fig. 8 is a second diagram for illustrating arrangement of introduction ports 1F and 2F and discharge ports 1E and 2E according to the modification. Fig. 8 shows container 50 when viewed from the side of the positive direction of the Y axis. As shown in Fig. 8, also in container 50 in the modification, height HE1 at which discharge ports 1E and 2E are arranged in the outer circumferential surface of container 50 is lower than height HF 1 at which introduction ports 1F and 2F are arranged in the outer circumferential surface of container 50. Thus, also in the modification, the user can recognize whether or not a port is the introduction port or the discharge port, based on the difference in height at which the port is arranged, and connection of a pipe to a wrong port can be suppressed. Since discharge ports 1E and 2E are arranged at positions close to the bottom surface, the waste solution in container 50 tends to be guided to discharge ports 1E and 2E.

### [Aspects]

Illustrative embodiments described above are understood by a person skilled in the art as specific examples of aspects below.

(Clause 1) A container according to one aspect is included in a purification apparatus that purifies a specific sample from a mixed sample. In the container, the mixed sample is accommodated. The container has a shape extending in an axial direction. The container has an outer circumferential surface. The container includes an introduction port for introduction into the container, of a decomposition solution for treatment of a contaminant contained in the mixed sample, a heavy solution for separation of the mixed sample based on a specific gravity difference, or a rinse solution for cleaning of the container, and a first discharge port for discharge of a waste solution from the container. When the container is viewed from the axial direction, the introduction port and the first discharge port are both arranged at positions displaced toward one end position on the outer circumferential surface of the container.

According to the container described in Clause 1, works for checking the introduction port and the first discharge port can be simplified.

(Clause 2) The outer circumferential surface includes a first region and a second region, a boundary between which is defined by a line that passes through a center point in a shape of a cross section with respect to the axial direction of the container. The introduction port and the first discharge port are arranged in the first region.

According to the container described in Clause 2, a state of each of the introduction port and the first discharge port can be checked at a glance.

(Clause 3) A height of the first discharge port on the outer circumferential surface is lower than a height of the introduction port on the outer circumferential surface.

According to the container described in Clause 3, discharge of the waste solution in the container can be smoothed.

(Clause 4) A second discharge port for discharge of the waste solution from the container is further provided. The introduction port is arranged between the first discharge port and the second discharge port along the outer circumferential surface.

According to the container described in Clause 4, even when any one of the first discharge port and the second discharge port is clogged, linked occurrence of clogging in the other discharge port can be suppressed.

(Clause 5) The container is columnar.

According to the container described in Clause 5, efficiency in processing for stirring the mixed sample accommodated in the container is improved.

(Clause 6) A purification apparatus according to one aspect is a purification apparatus that purifies a mixed sample. The purification apparatus includes a container for separation of the mixed sample with a heavy solution based on a specific gravity difference, a decomposition solution reservoir that holds a decomposition solution, a heavy solution reservoir that holds the heavy solution, and a rinse solution reservoir that holds a rinse solution. The container has a shape extending in an axial direction. The container has an outer circumferential surface. The container includes an introduction port for introduction into the container, of a decomposition solution for treatment of a contaminant contained in the mixed sample, a heavy solution for separation of the mixed sample based on a specific gravity difference, or a rinse solution for cleaning of the container, and a first discharge port for discharge of a waste solution from the container. When the container is viewed from the axial direction, the introduction port and the first discharge port are both arranged at positions displaced toward one end position on the outer circumferential surface of the container.

According to the purification apparatus described in Clause 6, works for checking the introduction port and the first discharge port can be simplified.

(Clause 7) A wall portion that surrounds a circumference of the container is further provided. The wall portion is provided with an opening. The introduction port and the first discharge port are arranged at positions opposed to the opening.

According to the purification apparatus described in Clause 7, works for checking the introduction port and the first discharge port can be simplified; simply by viewing the introduction port and the first discharge port through the opening, they can be checked.

It should be understood that the embodiment disclosed herein is illustrative and non-restrictive in every respect. The scope of the present invention is defined by the terms of the claims rather than the description of the embodiment above and is intended to include any modifications within the scope and meaning equivalent to the terms of the claims.

### REFERENCE SIGNS LIST

1 purification apparatus; 1E, 2E discharge port; 1F, 2F introduction port; 11 to 23 pipe; 31 to 33 pump; 41 to 43 electromagnetic valve; 50 container; 51 first member; 52 second member; 55 discharge port; 61 to 64 port; 71 stirrer; 72 stirring bar; 80 discharge pipe; 100 purification instrument; 110 decomposition solution reservoir; 120 heavy solution reservoir; 130 rinse solution reservoir; 140, 150 waste solution reservoir; 210 filter; 215 supernatant reservoir; 300 casing; 300P opening; 310, 320, 330 passage hole; 500 control device; 501 computing device; 502 memory; 503 communication device; 504 display device; 505 input device; 506 data reading device; 507 storage medium; 510 storage; 511 control program; 512 control data; Ag1 angle; CP1 center point; HE1, HF1 height; Ln1 line; P1 end; Rg1 first region; Rg2 second region; Sf1 surface

## Claims

1. A container in which a mixed sample is accommodated, the container being included in a purification apparatus that purifies a specific sample from the mixed sample, the container having a shape extending in an axial direction, the container having an outer circumferential surface, the container comprising:
an introduction port for introduction into the container, of a decomposition solution for treatment of a contaminant contained in the mixed sample, a heavy solution for separation of the mixed sample based on a specific gravity difference, or a rinse solution for cleaning of the container; and
a first discharge port for discharge of a waste solution from the container, wherein
when the container is viewed from the axial direction, the introduction port and the first discharge port are both arranged at positions displaced toward one end position on the outer circumferential surface of the container.

2. The container according to claim 1, wherein
the outer circumferential surface includes a first region and a second region, a boundary between which is defined by a line that passes through a center point in a shape of a cross section with respect to the axial direction of the container, and
the introduction port and the first discharge port are arranged in the first region.

3. The container according to claim 1, wherein
a height of the first discharge port on the outer circumferential surface is lower than a height of the introduction port on the outer circumferential surface.

4. The container according to claim 1, further comprising a second discharge port for discharge of the waste solution from the container, wherein
the introduction port is arranged between the first discharge port and the second discharge port along the outer circumferential surface.

5. The container according to claim 1, wherein the container is columnar.

6. A purification apparatus that purifies a mixed sample, the purification apparatus comprising:
a container for separation of the mixed sample with a heavy solution based on a specific gravity difference;
a decomposition solution reservoir that holds a decomposition solution;
a heavy solution reservoir that holds the heavy solution; and
a rinse solution reservoir that holds a rinse solution, wherein
the container has a shape extending in an axial direction,
the container has an outer circumferential surface,
the container includes
an introduction port for introduction of the decomposition solution, the heavy solution, or the rinse solution into the container, and
a first discharge port for discharge of a waste solution from the container, and
when the container is viewed from the axial direction, the introduction port and the first discharge port both are arranged at positions displaced toward one end position on the outer circumferential surface of the container.

7. The purification apparatus according to claim 6, further comprising a wall portion that surrounds a circumference of the container, wherein
the wall portion is provided with an opening, and
the introduction port and the first discharge port are arranged at positions opposed to the opening.
